# EUROPÄISCHE PATENTANMELDUNG

(11) **EP 4 309 815 A1**
(43) Veröffentlichungstag der Anmeldung: **24.01.2024**
(21) Anmeldenummer: 23185707.9
(22) Anmeldetag: 16.07.2023
(51) Int. Cl.: B09B 3/40

(54) **VERFAHREN ZUR ANWENDUNG VON DEFINIERTEN ANORGANISCHEN FEINSTEN FESTEN PARTIKELN**

(30) Priorität: 17.07.2022 DE 102022117825
(71) Anmelder: Gesellschaft für innovative und nachhaltige Lösungen im Bauwesen UG, 35463 Fernwald (DE)
(72) Erfinder:
(74) Vertreter: Rauch, Udo

(57) **Zusammenfassung**

Es wird ein Verfahren zur Wiederverwendung schadloser inerter inaktiver anorganischer Ausgangsstoffe vorgestellt, beispielsweise Abfallstoffe Typ I, die insbesondere nicht mit hydraulischen Binder und Wasser reagieren, umfassend die Schritte: Zuführen der Ausgangsstoffe zu einem Mahl- oder Pulverisierungsprozess, Einrichten der Eigenschaften des Mahl- oder Pulverisierungsprozesses derart, dass eine Überwindung von Bindungskräften im Innern der Ausgangsstoffe, eine Oberflächenvergrößerung und/oder ein erhöhtes Reaktionsvermögen des inerten anorganischen Abfallstoffes realisiert wird, insbesondere mittels Mahlens der Ausgangsstoffe im Körnungsbereich von 0,5 µm bis 100 µm, bevorzugt 1 µm bis 63 µm, weiter bevorzugt 1 µm bis 36 µm zur Bereitstellung eines RC-Mineralgranulats.

## Beschreibung

### Gebiet der Erfindung

Die vorliegende Erfindung betrifft ein Verfahren zur Wiederverwendung schadloser inerter inaktiver anorganischer Ausgangsstoffe zur Herstellung eines Recycling (RC)-Mineralgranulats, eines RC-Mineralmischguts sowie eines RC-Mineralprodukts. Ferner betrifft die vorliegende Erfindung auch eine Vorrichtung, die für das Verfahren eingesetzt werden kann.

### Hintergrund und allgemeine Beschreibung der Erfindung

Inerte mineralische Abfälle haben den größten Anteil am Müllaufkommen in Deutschland. Diese stammen vorrangig aus den Industriebereichen der Steinverarbeitung und aus der Bauwirtschaft. Der Großteil der aufkommenden inerten anorganischen Abfälle dabei ist Bauschutt.

Bauschutt wird größtenteils der Wiederverwertung zugeführt, wofür er möglichst sortenrein zu sortieren ist. Der sortierte Bauschutt kann jedoch nicht bedingungslos dem Herstellungsprozess neuer Baustoffe hinzugefügt werden, sondern wird zum Beispiel als Schotter wiederverwendet oder zur Asphaltherstellung für den Straßenbau genutzt.

Bisher war in der Kreislaufwirtschaft der Fokus auf das Recyceln von sortenreinen inerten anorganischen Abfällen, da der Stand der Technik und der Forschung in diesem Bereich nur die inerten anorganischen Abfälle bevorzugte, deren chemischphysikalische Eigenschaften schon nachgewiesen wurden. Die Verwendung beispielsweise von groben Brechsanden als RC-Hauptkomponente ("RC" wird als Kurzform für Recycling verwendet) ist jedoch auf Grund des inerten Verhaltens ihrer Bestandteile begrenzt.

Der auf Grund der Größenordnung des Abfallaufkommens nicht unerhebliche Rest an unverwertbarem Bauschutt, muss deponiert werden. Dies liegt mitunter daran, dass für einige Baustoffe, wie zum Beispiel Fensterglasabfälle oder Glas- und Mineraldämmwolle, noch keine Wiederverwertungsmöglichkeiten bestehen. Generell existieren in der Kreislaufwirtschaft im Bereich der inerten anorganischen Abfälle derzeit noch viele Kreislauflücken, die noch geschlossen werden müssen. Dieser Zustand sorgt europaweit für eine Überlastung der Deponien und stellt ein bislang ungelöstes Problem dar. Es findet bestenfalls ein Downcycling statt, welches natürliche Ressourcen anteilig in Deponieabfall umwandelt. Das vorhandene Recyclingpotential wird derzeit nur ungenügend genutzt. Gleichzeitig werden aber wegen der Deponieknappheit große Mengen mineralischer Bauabfälle zu weit entfernten, teils ausländischen Deponien transportiert. So wurden im Jahr 2020 aus Deutschland 4.414.000 Tonnen Abfall exportiert.

Das Recycling verschiedenster Baustoffe erhält eine stetig steigende Priorität, was sich auch durch eine steigende Investition in Forschung und Entwicklung niederschlägt. Bekannt ist die deutsche Offenlegungsschrift DE 10 2020 115 873 A1, die sich grundsätzlich aber lediglich mit der Aufbereitung von sortenreinem (!) Beton beschäftigt. Jedoch selbst für sortenreine Betonabfälle zeigt dieses Dokument keine Hinweise, die in Richtung der vorliegenden Erfindungen zeigen. Schließlich weiß der Fachmann, dass die mit der Lehre der DE 10 2020 115 873 A1 erhaltenen RC-Baustoffe nicht wasserfest sind und somit lediglich für den Innenausbau verwendet werden könnten.

Die Druckschrift DE 20 2010 009 045 U1 zeigt ein Formstein-Bauteil für ein Gebäude welches mittels Harz als Bindemittel geklebt wird. Die Eignung von RC-Baustoffen wird darin nicht diskutiert. Ganz analog dazu zeigt die Druckschrift DE 10 2004 043 614 A9 ein hydraulisches Bindemittel, welches herkömmlich, das heißt aus unverbrauchten Rohstoffen hergestellt wird. Beide Dokumente zeigen also höchstens den Hintergrund bzw. das technische Gebiet der vorliegenden Erfindung.

Das Dokument DE 10 2008 004 477 A1 zeigt ein Verfahren zur Aufbereitung von Verbrennungsschlacken aus Müllverbrennungsanlagen sowie die Trennung von verschiedenen Edelstoffen aus den Schlacken. An keiner Stelle offenbart dieses Dokument die Herstellung von RC-Baustoffen. Auch die DE 10 2014 019 352 B3, die eine Brandschutzplatte mit Zementsteinmatrix zeigt, liegt fern der vorliegenden Erfindung.

Das Dokument DE 10 2016 225 453 A1 zeigt ein Verfahren zur Herstellung eines hydraulischen Bindemittels durch Aufbereitung eines Baureststoffs. Auch hier wird (und kann nur) sortenreiner Bauschutt verwendet (werden), so dass ein Großteil der Deponieabfälle hiermit gar nicht berücksichtigt werden kann. Außerdem kann nur in einem relativ kleinen Anteil überhaupt ein RC-Material zugesetzt werden. Das Dokument DE 10 2021 108 322 A1 zeigt noch ein weiteres Herstellungsverfahren für ein zementhaltiges Bindemittel, wobei Müllverbrennungsaschen in einem Anteil zugesetzt werden können, um eine mörtelartige Konsistenz einzustellen. Abermals wird also überhaupt nur das Bindemittel selbst betrachtet, und dort ist auch nur ein nicht ausreichender Anteil der Rohstoffe durch RC-Material ersetzbar. Die DE 10 2020 128 894 A1 zeigt schließlich noch den Einsatz von Hausmüll-Verbrennungs-Asche in einem hydraulischen Bindemittel, wobei dasselbe wie zum vorgenannten Dokument beschriebene gilt.

Das wirtschaftliche Problem des Recyclings ist die Überanspruchung der natürlichen Ressourcen, wodurch Rohstoffe knapper und teurer werden, was die Planungssicherheit im Bauwesen verschlechtert. Außerdem stehen jedenfalls in Europa, wenn nicht gar weltweit, viele Deponien vor Lagerengpässen. Es ist schlicht kein Platz mehr vorhanden, die steigenden Mengen dieser Abfälle abzulagern. So werden teils bereits juristische Auseinandersetzungen um Erweiterungen von Deponien geführt und in verschiedenen Ländern Verbote zur Ablagerung bestimmter Stoffe ausgesprochen. So wird in Österreich ab dem Jahr 2024 die Ablagerung von Ziegeln aus der Produktion, Straßenaufbruch, technisches Schüttmaterial, Betonabbruch, Gleisschotter, Asphalt, Einkehrsplitt und Recycling-Baustoffe der Qualitätsklasse U-A verboten. Ab dem Jahr 2026 betrifft das Deponieverbot zusätzlich künstliche Mineralfasern. In Deutschland fallen jährlich ca. 200 Mio. Tonnen mineralische Bau- und Abbruchabfälle dar, bereits 2021 waren wachsende Transportentfernungen zu Deponiestandorten häufig bereits größer als 200 km. Im Beispiel Mineralwolle ist die Entsorgungsgebühr in Deutschland von vor wenigen Jahren 40 bis 50 Euro je Tonne auf aktuell 60 bis 675 Euro je Tonne (regional noch stark unterschiedlich) angestiegen. Beim Interessenverband deutscher Deponiebetreiber geht man davon aus, dass bis 2027 die zu deponierenden Abfälle auf 3 Millionen Kubikmeter (= 4,8 Mio. Tonnen) ansteigen werden. Unter diese Annahme bedarf es noch erheblicher Anstrengungen, ausreichenden Deponieraum zu schaffen. Am 10. Februar 2021 nahm das Europäische Parlament eine Entschließung an, in der schärfere Recyclingziele und verbindliche Reduktionsziele bei der Verwendung und dem Verbrauch von Materialien bis 2030 gefordert werden. In der EU fallen jährlich mehr als 2,5 Milliarden Tonnen Müll an. Die Abgeordneten fordern die EU-Länder nachdrücklich auf, hochwertiges Recycling zu fördern, Abfalldeponierung zu beenden und Müllverbrennung zu beschränken. Insgesamt könnten Deponiebetreiber in absehbarer Zukunft Rohstoffhersteller oder Produzenten für Baumaterialien werden.

Das technische Problem beim Recycling von inerten anorganischen Abfällen sind just ihre inerten Eigenschaften, wodurch sie schlecht gebunden werden können und daher keine erneute Verwendung in ihrer ursprünglichen Funktion finden bzw. wenn überhaupt dann nicht in einem nennenswerten Rahmen. Die bislang in der Bauindustrie eingesetzten anorganischen Baustoffe sind im Sinne dessen, dass sie nach der Entsorgung in ähnliche Produkte zurückgewandelt werden können, ohne die Umwelt unverhältnismäßig zu belasten, nicht recycelbar. Es ist daher unabdingbar, dass neue, nach dem Aspekt ihrer Recycelbarkeit konzipierte RC-Baustoffe die Konventionellen ersetzen.

Die vorliegende Beschreibung befasst sich daher mit Weiterentwicklungen in den drei elementarsten Bereichen der Bauwirtschaft: Rohstoffgewinnung, Baustoffherstellung und Entsorgung. Diese werden durch die Anwendung des hier vorgestellten Verfahrens zu einem Kreislauf, beginnend mit der Rohstoffgewinnung.

Bislang werden nur die sortenreinen aufbereiteten inerten anorganischen Abfälle verwendet. Die vorliegende Erfindung beschäftigt sich davon ausgehend mit der Aufgabe, nicht sortenreine inerte anorganische Partikel, Stoffe und Stoffgemische bzw. auch solche Partikel, Stoffe und Stoffgemische wiederzuverwenden, welche bislang als nicht recycelbar erachtet werden.

Die Erfindung hat sich in einem Aspekt die Aufgabe gestellt, ein Verfahren zu schaffen, mit welchem nicht sortenreine inerte anorganische Bauabfälle einer Wiederverwendung zugeführt werden können.

Ein weiteres Augenmerk der vorliegenden Erfindung liegt auf der Bereitstellung einer Anlage zur Herstellung von Baumaterialien, welche aus nicht sortenreinen inerten anorganischen Bauabfällen hergestellt sind. Im Übrigen liegen im Fokus der Erfindung auch Baumaterialien selbst, hergestellt aus nicht sortenreinen inerten anorganischen Bauabfällen.

Das Problem wird gelöst durch die in den unabhängigen Ansprüchen definierte Erfindung. Abhängige Ansprüche geben Weiterbildungen und bevorzugte Ausgestaltungen der Erfindung wieder.

Die vorliegende Beschreibung schlägt hierfür ein Verfahren zur Wiederverwendung nicht-toxischer inerter inaktiver anorganischer Ausgangsstoffe, beispielsweise Abfallstoffe Typ I vor, die insbesondere nicht mit hydraulischen Binder und Wasser reagieren. Dabei bezieht sich die Definition "nicht-toxisch" auf die Festlegung in § 7 (3) KrWG, und ist dem Begriff "schadlos" gleichgesetzt. Demgemäß ist ein Abfall nicht-toxisch oder schadlos, wenn nach der Beschaffenheit der Abfälle, dem Ausmaß der Verunreinigungen und der Art der Verwertung Beeinträchtigungen des Wohls der Allgemeinheit nicht zu erwarten sind, insbesondere keine Schadstoffanreicherung im Wertstoffkreislauf erfolgt.

Das Verfahren umfasst den Schritt Zuführen der vorgenannten Ausgangsstoffe zu einem Mahl- oder Pulverisierungsprozess. Mit anderen Worten sollen sortenreine inerte anorganische Partikel, Stoffe und Stoffgemische gemeinsam mit nicht sortenreinen inerten anorganischen Partikel, Stoffen und Stoffgemischen einem Mahl- oder Pulverisierungs- sowie ggf. dem Herstellungsprozess zuzuführen. In einem weiteren Aspekt ist auch möglich, lediglich nicht sortenreine inerte anorganische Partikel, Stoffe und Stoffgemische wiederzuverwenden, also nur solche, die bislang nicht als wiederverwendbar angesehen wurden. Für das Verfahren und die damit herzustellenden Produkte scheinen beide Ausgangsstoffe gleichermaßen attraktiv.

Das Verfahren schlägt weiter vor das Einrichten des Mahl- oder Pulverisierungsprozesses derart, dass eine Überwindung von Bindungskräften im Innern der Ausgangsstoffe, eine Oberflächenvergrößerung und/oder ein erhöhtes Reaktionsvermögen des inerten anorganischen Abfallstoffes realisiert wird. Das Einrichten des Mahl- oder Pulverisierungsprozesses kann dahingehend erfolgen mittels Mahlens der Ausgangsstoffe im Körnungsbereich von 0,5 µm bis 100 µm, bevorzugt 1 µm bis 63 µm, weiter bevorzugt 1 µm bis 36 µm, zur Bereitstellung eines RC-Mineralgranulats.

Der Rohstoff, welcher im Verfahren vornehmlich genutzt werden soll, ist undifferenzierter, inerter anorganischer Abfall, vornehmlich von Abrissarbeiten. Diese Auswahl stellt keine technische Bedingung dar, sondern ist an der Marktverfügbarkeit ausgerichtet beziehungsweise an dem drängenden sich abzeichnenden Bedarf danach, eine größere Auswahl von Baustoffen dem Recycling zuzuführen und somit Deponien zu entlasten. Dieser inerte anorganische Abfall soll weiterverarbeitet und zum neuen RC-Sekundärrohstoff veredelt werden.

Ein Stoff oder Gegenstand kann seine Abfalleigenschaft ablegen, wenn dieser ein Recycling oder ein anderes Verwertungsverfahren durchlaufen hat und so beschaffen ist, dass er üblicherweise für bestimmte Zwecke verwendet wird, ein Markt für ihn oder eine Nachfrage nach ihm besteht, er alle für seine jeweiligen Zweckbestimmung geltenden technischen Anforderungen sowie alle Rechtsvorschriften und anwendbaren Normen für Erzeugnisse erfüllt, sowie seine Verwendung insgesamt nicht zu schädlichen Auswirkungen auf Mensch oder Umwelt führt.

Als Ausgangsstoff dienen also beispielsweise nicht-toxische inerte anorganische Abfallstoffe Typ I, das sind inaktive inerte Ausgangsstoffe, die nicht mit hydraulischen Binder und Wasser reagieren. Dabei kommen die folgenden inerten anorganischen, nicht toxischen Abfälle beispielhaft in Frage, welche gemäß Verordnung über das Europäische Abfallverzeichnis zum Beispiel die folgenden Schlüsselnummern aufweisen: AW 010408/ 010409/ 010410/ 010413/ 101103/ 101105/ 101110/ 101112/ 101114/ 101203/ 101206/ 101208/ 101212/ 101311/ 101314/ 120102/ 150107/ 160120/ 160304/ 170101/170102/ 170103/ 170107/ 170202/ 170604/ 170904/ 190401/ 191205/ 191209/ 200102.

Sämtliche eindeutig beispielsweise in der zuvor genannten Form deklarierten inerten anorganischen Stoffgemische auch oder besonders aus einer Klassifizierung, die bisher nur zur Deponielagerung vorgesehen waren, können miteinander gebrochen und gemahlen werden, ohne dass Mengenverhältnisse zueinander vorzugeben oder einzuhalten wären.

Ein Anlieferungsbeispiel an eine Deponie könnte demgemäß umfassen: Inerte anorganische Stoffe und Stoffgemische z.B. mineralische Salze, Dämmung, Glasbruch, Füller, Ziegel und Betonsteine verfüllt mit mineralischer Dämmung, Baustoffe die nicht mehr für die Weiterverarbeitung geeignet sind (z. B. Fliesenkleber, Mörtel, Putze bei zu langer Lagerung), Faserzementplatten (asbestfrei), Glasbausteine, lose zement- oder kalkgebundene Mauerreste, mit anorganischen Restabfall vermischte Erde und Bauschutt aus Altablagerungen, mineralische Strahlmittelrückstände ohne gefährliche/toxische Stoffe, Perlite, Tennisplatzsand, Ofenausmauerungen aus Vermiculit, Fensterglas, Spiegelglas, mineralischer Bauschutt aus Abbruch- und Baumaßnahmen, Fußbodenestrich, Betonestrich, Schlacke aus Balkenfächern, Porenbetonsteine und Porenbetonsteine mit vermischtem Bauschutt etc. Ohnehin besteht jetzt schon bei jeder Anlieferung an eine Deponie, die nicht eindeutig deklariert werden kann, eine Nachweispflicht, dass es sich nicht um krebserregende oder asbesthaltige mineralische Abfälle handelt. Somit können bestehende Sortierverfahren gegebenenfalls sogar ohne jedwede Änderung übernommen werden und die nicht toxischen Abfälle mit den hier vorgestellten neuen Verfahren weiterverarbeitet werden. Im Rahmen einer Kosten-Nutzen-Analyse kann erwogen werden, ob bei der Masse an unsicheren (ohne Nachweis) inerten mineralischen Abfällen steigende Entsorgungskosten den höheren Aufwand für beispielsweise aufwendige Laboranalysen rechtfertigen zur Bestimmung des Abfalltyps.

Werden größere Mengen an Fensterglasbruch gefunden oder angeliefert, können diese ggf. gesondert zerkleinert und gemahlen werden. Ihre besondere puzzolanische Reaktionsfähigkeit kann in vorteilhafter Weise für RC-Mineral-Hochbau-, bzw. RC-Mineral-Tiefbau-Produkte mit höheren Festigkeitsanforderungen gebraucht werden. Ansonsten können aber jede Mengen an Fensterglasbruch auch in anderweitige RC-Mineralprodukte eingebaut werden, da eine Erhöhung der Festigkeitsklasse in der Regel vorteilhaft ist.

Die nicht-toxischen Typ I inerten anorganischen Stoffe und Stoffgemische werden einem Pulverisierungsprozess zugeführt, und durch den definierten Mahlprozess, z.B. mit einer Walzenschüsselmühle im Körnungsbereich Größtkorn < 63 µm bis 1 µm, explizit 36 µm bis Kleinstkorn 1 µm, gemahlen. Dadurch wird eine Überwindung der Bindungskräfte im Innern, eine Oberflächenvergrößerung und damit ein deutlich erhöhtes Reaktionsvermögen des inerten anorganischen Abfallstoffes erzeugt. Diese erzeugten feinsten festen Partikel im Körnungsbereich Größtkorn 36 µm bis Kleinstkorn 1 µm erreichen dadurch eine erhöhte und aktive puzzolanische, latent hydraulische und/oder Füller Eigenschaft Typ II.

Dieser neue RC-Sekundärrohstoff Typ II umfasst also aktive puzzolanische und/oder latent hydraulische Stoffe, die mit bei der Hydratation des Zementsteins entstehendem Calciumhydroxid reagieren, und die selbst hydraulisch erhärten oder durch den Füllereffekt als fein aufgeteilte inerte anorganische feinste feste Partikel, und beispielsweise durch ein "0,063 explizit 0,038-mm-Sieb" hindurchgehen, und die zum Beispiel im Beton physikalisch wirksam sind. So können neue RC-Baustoffe und - produkte aus (ehemals inerten) anorganischen Materialien oder Abfälle als RC-Baustoffe bereitgestellt werden.

Mit dem hier vorgestellten Verfahren kann voraussichtlich ein Deponienotstand verhindert werden und/oder ein arbeits- und/oder kostenintensiver Sortierprozess entfallen. Ferner kann mit dem hier vorgestellten Verfahren ggf. ein Upcycling der feinstgemahlenen anorganischen (ehemals inerten) festen Partikel zu RC-Sekundärrohstoffen durch Erhöhung der Reaktionsfähigkeit erfolgen.

Beim konventionellen Sortierverfahren wird die größtmögliche Sortenreinheit für inerte anorganische Abfälle angestrebt, die als sortenreine inerte Rezyklate mit ihren schon bestimmten Qualitätsanforderungen der Bauindustrie (z.B. RC-Zuschlagstoff für Beton) angeboten werden. Bei dem neu entwickelten Verfahren können jegliche inerte anorganische Typ I Abfallmengen (Typischerweise sind derzeit Ausnahmen hiervon: Gips, Holz, Metall, Erdaushub bestehend aus reinem Mutterboden) in ihrer gesamten Bandbreite (Stoffgemische z.B. Glas-, Mineralwoll-, Mauerwerksbruch-, Fliesen-, Mörtel-, Putz- und Porenbetonreste) ohne Erfassung der Volumenanteile der einzelnen anorganischen inerten Materialkomponenten miteinander dem Zerkleinerungsprozess zugeführt werden.

Durch das vorliegende Verfahren wird durch die Mahlung im Körnungsbereich Größtkorn < 63 µm bis 1 µm, explizit 36 µm bis Kleinstkorn 1 µm, das Abfallvolumen der inerten anorganischen Feststoffe, Feststoffgemische und der inerten anorganische feinsten festen Partikel reduziert. Die RC-Baustoffe stehen nach dem Prozess der Bauindustrie als RC-Hauptkomponente oder RC-Zuschlagstoffe zur Verfügung und können mit hydraulischem Kalk, Sumpfkalk, Romanzement, Portlandzement, geopolymerischen Bindemitteln gebunden werden zur Herstellung von RC-Mineralmischgut. Die RC-Zuschlagstoffe können zum Beispiel den Mörtel- und Putzherstellern angeboten werden um als Zuschläge in Mörteln oder Putzen eingesetzt zu werden. Aus RC-Mineralmischgut können RC-Mineral-Baustoffe hergestellt werden wie Formsteine bzw. Mauersteine.

Nicht toxische inerte anorganische Abfälle, die nach dem heutigem Stand der Technik deponiert werden müssen oder bereits deponiert sind (Deponieklasse DK 0 und DK I), werden bevorzugt zu Feinstpartikeln im Körnungsbereich zwischen Größtkorn < 63 µm bis 1 µm, explizit 36 µm bis Kleinstkorn 1 µm, zermahlen, sodass diese auch in unsortierter Form aktive puzzolanische, latent-hydraulische und/oder Füller Eigenschaften aufweisen und als RC-Hauptkomponente sowie auch als RC-Zuschlagstoffe im Bauwesen Verwendung finden. Das Verfahren ermöglicht nicht nur die Aufwertung dieser sortenreinen inerten anorganischen Abfälle sondern auch die der nicht sortenreinen inerten anorganischen Abfallgemische, die bis zum jetzigen Zeitpunkt nicht als RC-Sekundärrohstoff geschweige denn als RC-Mineral-Hochbau-Sekundärrohstoff und RC-Mineral-Tiefbau-Sekundärrohstoff in Betracht gezogen werden.

Die Korngröße bzw. Partikelgröße kann einen Einfluss auf die latent-hydraulische und/oder puzzolanische Reaktionsfähigkeit von RC-Mineralmehlen, um die es in der vorliegenden Anmeldung insgesamt geht, haben. Die systematische Untersuchung zeigte den Einfluss der Partikelgröße der mineralischen Mischausgangsstoffe auf die physikalischen Eigenschaften wie z.B. die Druckfestigkeiten. Die Partikelgröße bzw. Korngrößenverteilung des Ausgangsstoffs kann auch die Reaktivität beeinflussen, die zur alternativen Herstellung von z.B. Betonprodukten mit bis zu 100 % RC- Hauptkomponente und bis zu 99 % Reduzierung der konventionellen Bindemittel führen kann.

Zur Charakterisierung der RC-Mineralmehle kann somit die Partikelgrößenverteilung und deren Feinanteil herangezogen werden. So kann der Feinanteil zwischen den explizit festgelegten Korngrößen die jeweilige Reaktionsfähigkeit der unterschiedlichsten hergestellten RC-Mineralmehle festlegen.

Die Herstellung der Partikelfeinanteile in den RC-Mineralmehlen und deren Einflussfaktoren sowie ihre Wirkmechanismen können ein geringeres Porenvolumen (Verdichtungs- und Kapillarporen), eine geringere Wasseraufnahmefähigkeit bzw. Absolutwasseraufnahme aufweisen und insgesamt zu höheren Festigkeiten führen. Die RC-Mineralmehle mit höheren Anteilen an u.a. Fensterglas etc. sind latent hydraulisch reaktiv ähnlich, oder aber höher reaktiv.

RC-Mineralmischungen mit höheren Anteilen an u.a. Ziegelbruch, Aschen können puzzolanisch reaktiv ähnlich, sein, oder aber höher reaktiv ausgestaltet.

Hüttensand kann beigemengt werden, wobei bekannt ist, dass dieser eine latent hydraulische Reaktionseigenschaft aufweist. So kann er so eingestellt sein, dass er ein ähnliches Reaktionsverhalten wie Portlandzement aufweist, zum anderen sind auch puzzolanische Eigenschaften erkennbar. RC-Mineralmehle in expliziten Mahlfeinheiten zeigen eine erhöhte aktive puzzolanische Reaktion, die auf eine chemische Reaktion von Calciumhydroxid und Siliziumdioxid zu Calciumsilikathydraten zurückzuführen sein kann. Durch die Feinmahlung kann sich auch eine erhöhte aktive latent hydraulische Reaktion zeigen.

Verschiedene Abfall-Ausgangsstoffe (mineralische Abfälle) zur Herstellung der RC-Mineralmehle können beispielsweise unterschiedlich hohe Anteile an Calciumoxid enthalten, so dass eine Mischung vorteilhaft sein kann.

Bei dem Verfahren zur Herstellung von RC-Mineralmischgut werden feinst gemahlene anorganische feste Partikel mit einem hydraulischen oder geopolymerischen Bindemittel gemischt, wobei die Mischung selbstständig erstarrt und erhärtet. Umweltschädliche Emissionen und klimaschädliche Energien werden dadurch deutlich gemindert (ggf. kein Trocknungs-, Verdampfungs- und Brennprozeß notwendig).

Die benötigte Energie für das Verfahren, die Aufbereitung und Produktion kann selbst erzeugt werden, beispielsweise durch Einsatz von Photovoltaik- oder Windkraftanlagen auf dem Deponiegelände. Das Verfahren besitzt dadurch insgesamt einen hohen ökologischen und ökonomischen Wert.

Mit den wie vorliegend beschriebenen Verfahren wird eine deutliche Reduktion der Deponierung inerter anorganischer Stoffgemische erreicht. Mit jedem Kubikmeter Recyclingbaustoff wird Sekundärrohstoff gewonnen und ein Primärrohstoff eingespart. Gleichzeitig wird ein Kubikmeter Deponieraum für inerte anorganische Abfälle nicht mehr benötigt.

Die nicht toxischen (schadlosen) Typ I inerten anorganischen Stoffe und Stoffgemische werden dem Mahl- oder Pulverisierungsprozess zugeführt. Durch den definierten Mahlprozess werden feinste feste Partikel bevorzugt im Körnungsbereich Größtkorn < 63 µm bis 1 µm, explizit 36 µm bis Kleinstkorn 1 µm zermahlen und dadurch je nach Ausgangsmaterial eine enorme Reduktion des Abfallvolumens erreicht.

Mit anderen Worten wandelt die Erfindung mineralische Abfälle zu hochwertigen RC-Sekundärrohstoffen mit latent hydraulischen und(/oder) puzzolanischen Reaktionsfähigkeiten um. Sie sind keine hydraulischen Bindemittel sondern RC-Sekundärrohstoffe die durch das neue Verfahren latent hydraulische und(/oder) puzzolanische Reaktionsfähigkeiten aufweisen. Bei herkömmlichen Verfahren ist es zwar unter Umständen möglich, bis zu 99% hydraulische Bindemittel einzusparen, aber ohne hydraulische Binder (min. 1 %) sind die erhaltenen Sekundärrohstoffe und Baustoffe nicht auf Dauer wasserbeständig.

Ferner ist die vorliegende Erfindung dann besonders vorteilhaft, wenn Korngrößen unter 2 mm eingesetzt sind. Dies ist bislang weder beobachtet worden, noch wäre dies in irgendeiner Norm aufgenommen. Im Grunde sind Einsätze von Gesteinskörnungen unter 2 mm Korngröße untersagt. Auch deshalb verfehlen bekannte Verfahren zur Herstellung von RC-Baustoffen einen Aspekt der Idee der vorliegenden Erfindung. Denn mithin können die zu Feinstpartikeln zermahlenen mineralischen Abfälle in ihren Stoffcharakteristika verändert werden. Die dadurch zu einem erhöhten Bindungsvermögen sowie einer ausgezeichneten latenthydraulischen / puzzolanischen Reaktionsfähigkeiten führen können. Eine überwachte Steuerung des Mahlprozess, kann hierbei den expliziten Größtkorn und den Mindestmahlfeinheitsgrad bestimmen bzw. ermitteln lassen.

In vorteilhafter Weiterbildung der Erfindung kann nämlich gerade im Falle der Mischung verschiedener mineralischer Abfälle, bei denen eine sich unterscheidende Festigkeit zwischen den unterschiedlichen Abfallarten vorliegen kann, sich ein unterschiedlicher Verkleinerungswiderstand der Abfallarten einstellen. Dies kann beispielsweise im Quarzgehaltanteil der Abfallarten begründet sein. Hierdurch kann sich eine Übermahlung einzelner mineralischer Komponenten einstellen, also ein Mahlen dieser Abfallart auf eine kleinere Korngröße im Vergleich zu den anderen, im gleichen Mahlvorgang mitgemahlenen Abfallarten.

Mit anderen Worten kann eine gesteuerte Übermahlung eines Anteils der zu mahlenden Materialien gezielt herbeigeführt werden. Dies ist erhebliche Weiterentwicklung im Vergleich zu bekannten Verfahren und bislang so nicht öffentlich beschrieben.

Die produzierten feineren Partikel, insbesondere aus der gesteuerten Übermahlung, können als Microfüller bezeichnet werden. Diese können maßgeblich die besagten latenthydraulischen / puzzolanischen Eigenschaften des RC-Baustoffs fördern. Die durch die Übermahlung von "weicheren" mineralischen Abfällen produzierten Feinstpartikeln (Microfüller) erhöhen die Reaktionsfähigkeiten der unterschiedlichsten Ausgangsstoffe. Durch die Übermahlung einzelner "weicheren" Mischmüllfraktionen werden im Mahlprozess die Microfüller bereitgestellt, welche eine reduzierte Oberfläche aufweisen können. Die Microfüller können durch die Zermahlung und Beschleunigung der einzelnen "weicheren" Mischmüllfraktionen in Wechselwirkung treten mit der Zermahlung und Beschleunigung der einzelnen "festeren" Mischmüllfraktionen und deren vorhandenen größeren Oberflächen. Die im Mahlprozess auftretenden Scherbewegungen sowie die dabei enstehenden Oberflächenvergrößerungen können den in der vorliegenden Beschreibung erläuterten vorteilhaften vorantreibenden Effekt unterstützen, von den mineralischen RC-Mehlen auf die Zementhydratation überzuwechseln.

Durch den Mahl- und Mischprozess der mineralischen Mischabfälle, also dem gemeinsamen Mahlprozess verschiedener Abfallarten, kann eine Wechselbeziehung der entstandenen unterschiedlichsten Oberflächen auftreten. Die latenthydraulische / puzzolanische Reaktionsfähigkeit kann dann durch eine Binderreaktionsfähigkeit des kontrolliert gemahlenen Größtkorn und den explizit bestimmten übermahlten RC-Materialien (Mircrofüller) gefördert werden.

Dieses Potential mineralischer Stäube - also Microfüller - wie in dieser Beschreibung in aller Ausführlichkeit erörtert, wird weder in veröfentlichter Forschung noch im Stand der Technik je beschrieben.

Das in dieser Beschreibung vorgeschlagene Verfahren kann weiter ausgebildet sein, indem der Mahl- oder Pulverisierungsprozess durch einen definierten Mahlprozess erfolgt, insbesondere mittels einer Walzenschüsselmühle. Alternativ oder kumulativ kann der Mahl- oder Pulverisierungsprozess hergerichtet sein, das RC-Mineralgranulat in feinste feste Partikel im Körnungsbereich Größtkorn < 63 µm bis 1 µm, explizit 36 µm bis Kleinstkorn 1 µm bereitzustellen. Ferner alternativ oder kumulativ kann das mittels des Mahl- oder Pulverisierungsprozesses bereitgestellte RC-Granulat zumindest eines aus einer aktiven puzzolanischen, einer latent hydraulischen und/oder Füller-Eigenschaft Typ II erreichen.

Das hier vorgeschlagene Verfahren kann ferner den Schritt umfassen Zuführen von Mineraldämmwolle in den Mahl- oder Pulverisierungsprozess zur Herstellung des RC-Mineralgranulats. Mit anderen Worten ist es möglich, Mineraldämmwolle einzusetzen, zu verdichten und in die herzustellenden RC-Mineralprodukte einzubauen. Beispielsweise ergibt 1 m³ Mineraldämmwolle nach dem Mahlvorgang im bevorzugten Körnungsbereich zwischen Größtkorn < 63 µm bis 1 µm, explizit 36 µm bis Kleinstkorn 1 µm, zermahlen ein Stampfvolumen von 0,081 m³. Dies entspricht einem Volumenverlust von 91,9%. Bei der Stampfdichte 0,037 m³, ergibt sich ein Volumenverlust von 96,3%. Wenn die Deponierung von ca. 5000 Tonnen Mineraldämmwolle im nicht komprimierten Zustand etwa einem Volumen von 100.000 bis 200.000 m3 entspricht wird dies durch den Mahlvorgang auf 5550 m³ reduziert werden, was vollständig in das RC-Mineralgranulat einsetzbar ist und somit die Deponien vollständig entlasten kann.

Die vorliegende Beschreibung schlägt auch ein Verfahren vor zur Herstellung eines RC-Mineralmischguts aus dem mit dem zuvor beschriebenen Verfahren bereitgestellten RC-Mineralgranulat. Dieses Verfahren weist den weiteren Schritt auf Vermischen des RC-Mineralgranulats mit einem hydraulischen oder geopolymerischen Bindemittel zur Herstellung eines giessfähigen RC-Mineralmischguts.

Des Weiteren schlägt die vorliegende Beschreibung auch ein Verfahren zur Herstellung eines RC-Mauersteins und einen Mauerstein hergestellt aus einem RC-Mineralgranulat vor, welches insbesondere unter Anwendung des vorstehend beschriebenen Verfahrens zur Herstellung eines RC-Mineralmischguts durchgeführt werden kann. Die folgenden Schritte sind umfasst: Zuführen von nicht-toxischen (schadlosen) inerten inaktiven anorganischen Ausgangsstoffen, beispielsweise Abfallstoffe Typ I, die insbesondere nicht mit hydraulischen Binder und Wasser reagieren, zu einem Mahl- oder Pulverisierungsprozess, Einrichten der Eigenschaften des Mahl- oder Pulverisierungsprozesses derart, dass eine Überwindung von Bindungskräften im Innern der Ausgangsstoffe, eine Oberflächenvergrößerung und/oder ein erhöhtes Reaktionsvermögen des inerten anorganischen Abfallstoffes realisiert wird, insbesondere mittels Mahlens der Ausgangsstoffe im Körnungsbereich von 0,5 µm bis 100 µm, bevorzugt 1 µm bis 63 µm, weiter bevorzugt 1 µm bis 36 µm zur Bereitstellung eines RC-Mineralgranulats, Vermischen der aktiven puzzolanischen, latent hydraulischen und/oder mit Füller Eigenschaften versehenen anorganischen festen feinsten Partikel Typ II mit hydraulischen oder geopolymerischen Bindemittel zur Herstellung eines giessfähigen RC-Mineralmischguts, sowie Gießen des giessfähiges RC-Mineralmischguts in Schalungsformen.

Der wie zuvor erläutert hergestellte Mauerstein kann in Weiterbildung DIN-Maße aufweisen. Alternativ oder kumulativ kann der Mauerstein solcherart hergerichtet sein, dass seine Vermauerung ohne Mörtel- bzw. Kleberfuge erfolgen kann, so dass kein zusätzlicher Mörtel bzw. Kleber nötig ist und der Mauerstein in endloser Kreislaufwirtschaft immer wieder vollständig rezyklierbar ist. So kann irgendwann zu dem E-Automobil und Bioeinkauf zukünftig der Bungalow aus ökologischen RC-Baumaterialien hinzutreten für einen bewusst ökologischen Lebensstil. Dabei ist es grundsätzlich bekannt, Mauersteine ohne Mörtelfugen zu verlegen. So wird Kalksandstein, Gasbeton und selbst Klinker mit Dünnbettmörtel verklebt. Es werden teils auch Steinkleber aus Polyurethan als Mörtelersatz verwendet. Ferner sind Betonschnellbausteine, Systembetonbausteine und Betonstapelsteine bekannt, die nur mit Verzahnungen und ohne Kleber oder Mörtel verbaut werden.

Das vorgenannte Herstellungsverfahren kann weiter ausgebildet sein mit zumindest einem der Schritte Verteilen, Rütteln, anschließendes Glattziehen, nach dem Abbinden der Rohlinge Entschalen des RC-Mineralmischguts mittels einer Vorrichtung, und/oder Einstellen eines Wasserzementwertes des giessfähigen RC-Mineralmischguts derart, dass es vollautomatisch in die Auspressform gepumpt und/oder anschließend in eine Presse gepresst werden kann, insbesondere unter Verdichten des RC-Mineralmischguts und Herauspressen überschüssigen Wassers.

Die zuvor genannten Verfahren können ferner ausgebildet sein mit zumindest einem der Schritte Bereitstellen von Pressformen für das RC-Mineralmischgut zur direkten Herstellung von RC-Mineral-Hochbau-Produkte und/oder RC-Mineral-Tiefbau-Produkte und/oder RC-Mineralstein, vollautomatisches hydraulisches Pressen in der Presse mit definiertem Wasserzementwert für das RC-Mineralmischgut, insbesondere als bodenfeuchtes RC-Mineralmischgut, und/oder Pressen der verdichteten homogenen RC-Mineralgutmischung mit definiertem Wasserzementwert durch eine in einer Strangpresse (B:Extruder) befindliche Schneckenwelle, insbesondere als plastisch-feuchter Massestrang durch ein definiertes Mundstück.

Das Einstellen des Wasserfeuchteanteils des bodenfeuchten RC-Mineralmischguts erfolgt dabei zu einem Wasserfeuchteanteil zwischen 3 bis 15 %, bevorzugt 5 bis 10 %, und weiter bevorzugt 7 bis 9 %. Das Einstellen des Wasserfeuchteanteils des plastisch-feuchten RC-Mineralmischguts kann dabei im Bereich von 12 bis 30 %, bevorzugt 15 bis 25 %, weiter bevorzugt 18 bis 22 % erfolgen. Alternativ oder kumulativ kann das definierte Mundstück der Strangpresse je nach Anforderungen anpassbar herstellbar sein, wobei insbesondere dessen Austrittsöffnung die Silhouette des RC-Formlings im Querschnitt in einer Richtung entspricht.

Alternativ oder kumulativ kann das Durchführen des Pressvorgangs der RC-Mineralgutmischen dergestalt erfolgen, dass an der Ausstosszone ein erhöhter Druck anliegt, so dass der homogene RC-Mineralmaterialstrom durch das Langlochmundstück formstabile RC-Mineral-Hochbau-Wärmedämm-Mauersteine produziert. Schließlich kann der Pressvorgang der RC-Mineralgutmischung unter Vakuum durchgeführt werden. Weiter ist es bevorzugt, wenn ein vollautomatischer Abtransport der hergestellten RC-Produkte auf Paletten erfolgt.

Im Folgenden legt die Offenbarung eine Vorrichtung dar zur Herstellung eines RC-Mineralgranulats aus nicht-toxischen inerten inaktiven anorganischen Ausgangsstoffen, beispielsweise Abfallstoffe Typ I, die insbesondere nicht mit hydraulischen Binder und Wasser reagieren. Die Vorrichtung ist dabei beispielsweise hergerichtet zur Durchführung eines der vorgenannten Verfahren. Die Vorrichtung umfasst einen Windsichter zum Aussortieren leichter Störstoffe, einen Metallabscheider, wie einen Magnetabscheider zur Entfernung metallischer Störstoffe, eine Brech- und Siebanlage für inerte anorganische Bauabfälle, eine Mahl- oder Pulverisierungsmühle zum Mahlen auf ein Granulatmaß von kleiner als 100 µm, bevorzugt 63 µm oder kleiner, weiter bevorzugt 36 µm oder kleiner, insbesondere auf eine Feinheit von 100 µm bis 0,5 µm, bevorzugt 63 µm bis 1 µm und noch weiter bevorzugt 36 µm bis 1 µm. Die Vorrichtung kann ferner umfassen eine Restfeuchtemesseinrichtung und/oder eine Absaugeinrichtung zur Absaugung von Mahlstaub.

Eine Vorrichtung zur Herstellung von RC-Mineralmischgut aus RC-Mineralgranulat, insbesondere hergestellt gemäß einem der vorstehend beschriebenen Verfahren und/oder mit der vorstehend beschriebenen Vorrichtung umfasst eine Dosier- und Mischanlage, ein Transportsystem, eine RC-Mineralprodukt-Fertigungsanlage und eine Frischseitentransportanlage.

Die wie vorstehend beschriebene Vorrichtung kann ferner aufweisen, dass die Dosier- und Mischanlage einen stationären Mischer umfasst zur homogenen Mikrovermischung des RC-Mineralmischguts; und/oder dass mittels des Transportsystems das RC-Mineralmischgut von der Dosier- und Mischanlage abtransportiert wird, beispielsweise zur RC-Mineral-Hochbau-Produkt-Fertigungsanlage; und/oder dass das Transportsystem eine Kübelbahn umfasst; und/oder dass die RC-Mineralprodukt-Fertigungsanlage ohne Vorsatzschicht und mit Vibrationsverfahren ausgelegt ist; und/oder dass die Frischseitentransportanlage unter Einbeziehung von Qualitätssicherungssystemen und/oder zum Transport zum Hubgerüst ausgelegt ist.

Die Vorrichtung kann ferner ausgestaltet sein, dass diese ferner umfasst ein Silo zur Lagerung oder Zwischenlagerung von RC-Mineralgranulat; und/oder ein Lager zur Berücksichtigung der hydraulischen Abbindezeit und der Frostgefahr vor der Abbindung; und/oder ein Hubgerüst zur Übergabe von Produktionspaletten an einen Gabelwagen; und/oder ein Senkgerüst zum taktweisen Rücktransport der Produktionspaletten; und/oder eine Zentriervorrichtung zum Lösen und Zentrieren der ausgehärteten Steine; und/oder eine Paketierungsanlage zum Zusammensetzen der RC-Mineralprodukte zu Paketen; und/oder eine Rückführungsanlage zur Rückführung der durch den Produktionsprozess entstehenden feinsten festen Partikel durch entsprechende Entstaubungsanlagen; und/oder eine Anlagenüberwachung zur Prozess- und Anlagensteuerung, zur Überwachung der Korngrößen, der komplexen und variierenden Mineralmischungen, des Pressdrucks und/oder des Giessverfahrens; und/oder in der Dosier- und Mischanlage einen stationären Industriemischer mit Planetengetriebe.

Des Weiteren können in der Dosier- und Mischanlage die anorganischen feinst gemahlenen RC-Mineral-Sekundärrohstoffe und die RC-Mineral-Zuschlagstoffe Typ II und die entsprechenden hydraulischen oder geopolymerischen Bindemittel der jeweiligen Rezeptur gravimetrisch dosiert und in definierten Zeitvorgaben miteinander vermischt werden. Die Restfeuchtemesseinrichtung kann hergerichtet sein mittels der Restfeuchtemessung der anorganischen feinst gemahlenen RC-Mineral-Sekundärrohstoffe Typ II und der Restfeuchtemessung von hydraulischen oder geopolymerischen Bindemittels den Wasserzementwert des RC-Mineralmischguts zu definieren, die zu einer definierten homogenen Mischung führt.

Im Folgenden wird die Erfindung anhand von Ausführungsbeispielen und unter Bezugnahme auf die Figuren näher erläutert, wobei gleiche und ähnliche Elemente teilweise mit gleichen Bezugszeichen versehen sind und die Merkmale der verschiedenen Ausführungsbeispiele miteinander kombiniert werden können.

### Kurzbeschreibung der Figuren

Es zeigen:
- Fig.1: einen schematischen Verfahrensablauf bzw. Komponenten einer Vorrichtung,
- Fig.2: schematischer weiterer Verfahrensablauf bzw. Komponenten einer Vorrichtung,
- Fig.3: schematischer weiterer Verfahrensablauf bzw. Komponenten einer Vorrichtung,
- Fig.4: Mauerstein hergestellt mit dem Verfahren bzw. der Vorrichtung.

### Detaillierte Beschreibung der Erfindung

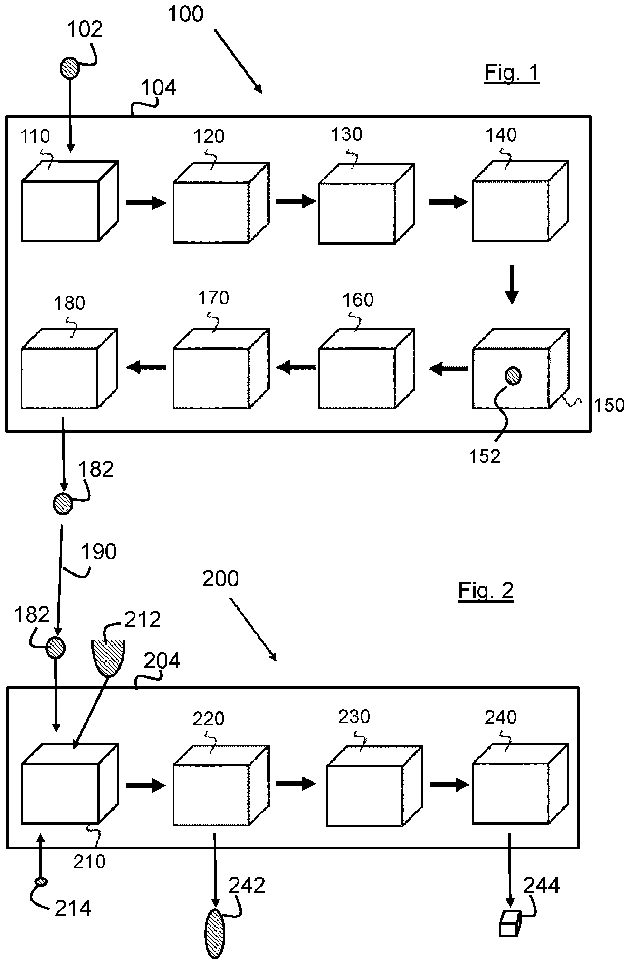

Bezug nehmend auf Fig. 1 ist der Ablauf der Herstellung des RC-Mineralmischguts aus zuvor beschriebenen Abfällen erläutert. Zunächst werden Abfälle 102 in die Produktionshalle 104 für den Aufbereitungs-Prozess der inerten anorganischen Abfälle angeliefert und einem Windsichter 110 zugeführt. Die nicht-toxischer inerter inaktiver anorganischer Ausgangsstoffe 102 werden im Windsichter 110 mittels Luftstrom behandelt zum Aussortieren von Störstoffen, wie leichten Abfällen. Aus dem Windsichter 110 werden die Ausgangsstoffe 102 dem Magnetabscheider 120 zugeführt zur Entfernung von metallischen Störstoffen. Anschließend werden die Ausgangsstoffe 102 zur Brech- und Siebanlage 130 für inerte anorganische Bauabfälle weitergefördert, wo diese gebrochen und/oder gesiebt werden können.

Sofern in den Ausgangsstoffen 102 Dämmstoffe wie Dämmwolle umfasst sind, kann ein Zerkleinerer 140 diese aufschließen und zerkleinern. In einer Mahl- oder Pulverisierungseinheit 150, beispielsweise in einer Walzenschlüsselmühle, werden die Ausgangsstoffe 102 nunmehr gemahlen. Die Körnung des Materials wird dabei beispielsweise auf eine Feinheit von 36 µm bis 1 µm gebracht, so dass ein feines RC-Mineralgranulat erhalten wird. Das RC-Mineralgranulat ist so fein, dass es ggf. auch als Pulver bezeichnet wird.

Im Anschluss bietet sich die Einrichtung einer Feuchtemesseinrichtung 160 zur Messung der Restfeuchte des erhaltenen RC-Mineralgranulats an. Hierfür können Sensoren angeordnet sein, beispielsweise derart, dass das RC-Mineralgranulat über die Sensoren befördert wird, oder dass in Zeitabständen Proben aus dem RC-Mineralgranulat entnommen werden und diese gemessen werden. Die Restfeuchtemessung, beispielsweise mittels Mikrowellensensoren, der anorganischen feinst gemahlenen RC-Mineral-Sekundärrohstoffe Typ II und die Restfeuchtemessung der zuzusetzenden hydraulischen oder geopolymerischen Binder bestimmen die Wasserzugabe und somit die Wasserzementwert (w/z), die zu einer definierten homogenen Mischung führen. Untersuchungen haben gezeigt, welchen Einfluss der Wasserzementwert w/z (Masseverhältnis Wasser zu Zement) auf die Festigkeiten der zu produzierenden Bauteile hat.

Da bei dieser Herstellung mitunter feine Stäube entstehen können, kann in vorteilhafter Weise eine Absaugeinrichtung 170 solche Stäube absaugen und insbesondere in den Prozess rückführen, so dass die Stäube zur Herstellung des RC-Mineralgranulats beigefügt werden. Schließlich kann das RC-Mineralgranulat in einem Silo 180 gelagert werden, beispielsweise ein Tangential-Mischsilo oder ein Multipacksilo. Hier können Siloanlagen vorgesehen sein für die zeitliche Lagerung der feinst gemahlenen RC-Mineral-Sekundärrohstoffe, Leichtzuschlagstoffe und der hydraulischen Binder. Schließlich wird mit der Anlage 102 ein RC-Mineralgranulat 182 erhalten, welches zur weiteren Verwendung als Füllstoff in Putzen oder Klebern oder dgl. und/oder zur Herstellung von Baustoffen und Werkstücken aus dem RC-Mineralgranulat 182 Verwendung finden kann.

So kann auf einer Lieferstrecke 190 (optional) das RC-Mineralgranulat in eine weitere Produktionskette bzw. Produktionshalle 204 transportiert werden. Ob es sich bei den gezeigten Hallen 104, 204 um eine gemeinsame oder getrennte Hallen handelt, kann ggf. nach den baulichen Gegebenheiten erwogen werden. Eine separate Anordnung in zwei Hallen 104, 204 hat den Vorteil, dass die staub- und lärmintensive Bereitstellung des RC-Mineralgranulats 182 in Beabstandung von der weiteren Herstellung von RC-Mineralmischgütern 242 stattfindet.

Wie aus Fig. 2 schematisch erläutert wird, wird das RC-Mineralgranulat 182 in die Produktionshalle 204 für den Herstellungsprozess von RC-Mineralmischgütern 242, insbesondere in Pulverform, und/oder von RC-Mineralprodukten 244, insbesondere in fester Form, überführt. Dort kann das RC-Mineralgranulat 182 zunächst einer Dosier- und Mischanlage 210 eingebracht werden, die beispielsweise einen stationären Mischer mit Planetengetriebe umfasst. In der Dosier- und Mischanlage 210 kann im Hinblick auf den weiteren Herstellungsprozess die Materialfeuchte mittels Beimischung von Wasser 214 eingestellt werden und/oder hydraulische oder geopolymerische Bindemittel 212 zugesetzt werden. Die Bindemittel 212 können beispielsweise Zement, Kalk oder Polymere umfassen. Vorteilhaft ist, dass sogar wenn Zement als Bindemittel 212 eingesetzt wird die vorteilhaften Eigenschaften des RC-Mineralmischguts 242 dafür sorgen, dass erheblich weniger Zement zugesetzt werden muss als bei herkömmlichen Mineralprodukten, im Idealfall überhaupt kein Zement.

Die Dosier- und Mischanlage 210 kann einen stationären Industriemischer umfassen zur Gewährleistung einer optimalen und definierten Mikrovermischung zu einem homogenen RC-Mineralmischgut 242.

Ferner können in der Dosier- und Mischanlage 210 die anorganischen feinst gemahlenen RC-Mineral-Sekundärrohstoff, die RC-Mineral-Zuschlagstoffe Typ II und die entsprechenden Bindemittel 212 der jeweiligen Rezeptur gravimetrisch dosiert und in definierten Zeitvorgaben miteinander vermischt werden, wobei die vorgenannten Stoffe beispielsweise getrennt in Silos 180 zur weiteren Verwendung gelagert sein können.

Das dosierte bzw. eingestellte RC-Mineralmischgut 242 kann nun entweder über ein Transportsystem 220 abtransportiert und abgepackt werden, so dass es zum Beispiel als Zuschlagstoff für Baustoffe wie Mörtel, Kleber, Putze etc. eingesetzt werden kann. Oder aber das dosierte bzw. eingestellte RC-Mineralmischgut 242 wird über das Transportsystem 220, beispielsweise einer Kübelbahn, transportiert von der Dosier- und Mischanlage 210 zur RC-Mineralprodukt-Fertigungsanlage 230 zur Herstellung von RC-Mineralprodukten 244 wie Mauerstein. Die RC-Mineralprodukt-Fertigungsanlage 230 kann ausgelegt sein ohne Vorsatzschicht und mit Vibrationsverfahren. Im Anschluss kann ein Frischseitentransport 240 vorgesehen sein, beispielsweise zu einem Hubgerüst 310.

Die RC-Mineralprodukte 244 sind nach deren initialen Herstellung in der Produktionshalle 204 ggf. weiter zu behandeln bevor eine Paketierung bzw. Auslieferung erfolgen kann. So kann hinsichtlich der RC-Mineralprodukte 244 in der Produktionshalle 304 für die kurzfristige Lagerung der Recyclingprodukte 244 die hydraulischen Abbindezeit und Frostgefahr vor der Abbindung Berücksichtigung finden, beispielsweise indem diese fachgerecht gelagert werden. Mittels des Hubgerüsts 310 wird die Produktionspalette 244 an einen Gabelwagen 320 übergen, der sie an das Senkgerüst 330 übergibt. Die Produktionspaletten 244 werden vom Senkgerüst 330 taktweise rücktransportiert. Eine Zentriervorrichtung 340 löst und zentriert die ausgehärteten Steine 244. Eine Paketierungsanlage 350 setzt die RC-Mineralprodukte 244, beispielsweise RC-Mineral-Hochbau-Produkte, zu Paketen zusammen. Gabelstapler 360 bringen diese Pakete dann zu ihrem Lagerplatz, an dem die RC-Mineralprodukte 244 typischerweise 28 Tage abgelagert werden. Auch in dieser Produktionshalle 304 kann eine Rückführung der durch den Produktionsprozess entstehenden feinsten festen Partikel durch entsprechende Entstaubungsanlagen 370 erfolgen. Schließlich wird ein fertig palettiertes und auslieferbares RC-Mineralprodukt 374 bereitgestellt, welches das Deponiegelände wieder verlassen und zurück in den Wirtschaftskreislauf kehren kann. Dies stellt eine enorme Entlastung für Deponien und einen Schritt hin zu weniger endzulagernden Abfall dar.

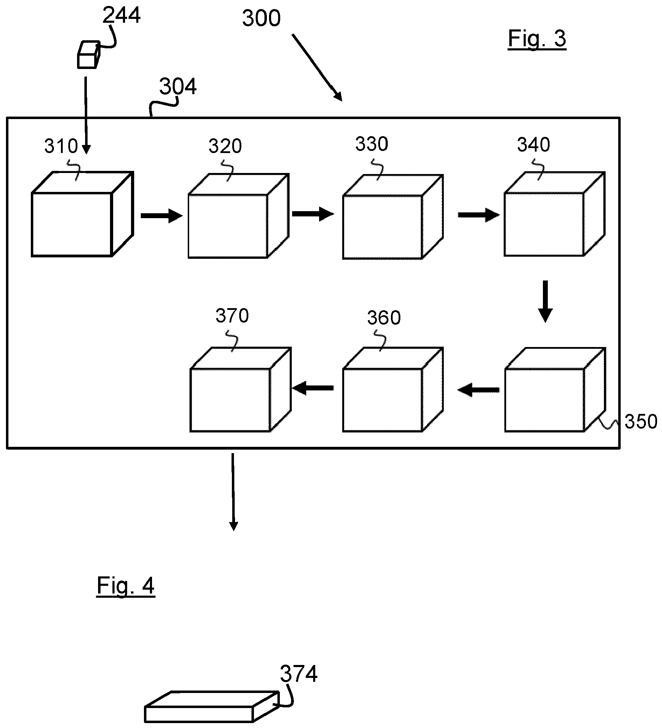

Fig. 4 zeigt beispielhaft ein RC-Mineralprodukt 374 in Form eines Mauersteins. Der Mauerstein 374 ist hergestellt aus RC-Mineralgranulat, hergestellt aus nicht-toxischen inerten inaktiven anorganischen Ausgangsstoffen, beispielsweise Abfallstoffe Typ I, das unter Beisetzung von hydraulischem Bindemittel 212 als giessfähiges RC-Mineralprodukt 244 in eine Giessform der RC-Mineralprodukt-Fertigungsanlage 230 eingegossen wurde. Es handelt sich daher um einen Formstein bzw. um einen gegossenen und gepressten Mauerstein. Der Mauerstein 374 aus diesem Beispiel weißt DIN-Maße solcherart auf, dass seine Vermauerung ohne Mörtel- bzw. Kleberfuge erfolgen kann, so dass kein zusätzlicher Mörtel bzw. Kleber nötig ist und der Mauerstein in endloser Kreislaufwirtschaft immer wieder vollständig rezyklierbar ist. Beispielsweise können als RC-Mineralprodukt 374 RC-Mineral-Sekundärrohstoffe, RC-Mineral-Hochbau-Hauptkomponenten, RC-Mineral-Tiefbau-Hauptkomponenten, RC-Mineral-Hochbau-Zuschlagstoffe, RC-Mineral-Tiefbau-Zuschlagstoffe, RC-Mineral-Hochbau-Produkte und RC-Mineral-Tiefbau-Produkte hergestellt werden.

Im Folgenden werden verschiedene Verfahren zur Herstellung von RC-Mineralprodukten 242, 244, 374 vorgestellt.

### Verfahren I A

Hierbei handelt es sich um ein Wetcast-Verfahren, in dem das definierte Wasserzementwert-bestimmte, giessfähige RC-Mineralmischgut 182 (anorganische feste feine Partikel Typ II im Körnungsbereich gemahlen von Größtkorn < 63 µm bis 1 µm, explizit 36 µm bis Kleinstkorn 1 µm vermischt mit hydraulischen oder geopolymerischen Bindemitteln 212) vollautomatisch in Schalungsformen gegossen und mit einer speziellen Vorrichtung verteilt, gerüttelt und anschließend glattgezogen wird. Erst nach dem Abbinden werden die RC-Mineralrohlinge entschalt. Nach der Erstarrungszeit können die RC-Mineral-Hochbau-, bzw. RC-Mineral-Tiefbau-Produkte der 28-tägigen Lagerung zugeführt werden. Die Abbindezeiten sind abhängig von hydraulischen oder geopolymerischen Bindern.

### Verfahren II A

Vorgestellt wird ein Nasspressverfahren, in dem das giessfähige RC-Mineralmischgut 242 (anorganische feste feine Partikel 102 Typ II im Körnungsbereich gemahlen von Größtkorn 36 µm bis Kleinstkorn 1 µm mit hydraulischen oder geopolymerischen Bindemitteln 212) vollautomatisch in die Auspressform gepumpt und mit einer speziellen Vorrichtung verteilt, gerüttelt, glattgezogen und anschließend in der Presse mit sehr hohem Druck gepresst wird. Dabei wird die Mischung sehr stark verdichtet und überschüssiges Wasser herausgepresst. Dann können die RC-Mineral-Hochbau- bzw. RC-Mineral-Tiefbau-Produkte direkt der 28-tägigen Lagerung zugeführt werden, da durch die Verdichtung die RC-Mineral-Hochbau-, bzw. RC-Mineral-Tiefbau-Produkte stark verfestigt wurden und sofort lagerfähig sind.

### Verfahren IIIA

Vorgestellt wird ein Trockenpressverfahren. Anorganische feste feine Partikel 102 Typ II im Körnungsbereich gemahlen von Größtkorn 36 µm bis Kleinstkorn 1 µm, mit hydraulischen oder geopolymerischen Bindemittel 212 werden für vollautomatische hydraulische Pressungen, bei der die Druckmaschine, die mit sehr hohem Druck und mit definiertem Wasserzementwert, gleich ein bodenfeuchtes RC-Mineralmischgut (Wasseranteil von z.B. 5-10 Ma-%), die RC-Mineralmischungen 242 in Formen presst und die RC-Mineral-Hochbau-, bzw. RC-Mineral-Tiefbau-Produkte 244 vollautomatisch zeitnah aus der Schalung heraus auf Paletten transportiert. RC-Mineral-Hochbau-, bzw. RC-Mineral-Tiefbau-Produkte 244 können sofort ausgeschalt und der Lagerung zugeführt werden. Den RC-Mischungen 242 wurde weniger Wasser zugeführt als zur vollständigen Hydratation des Zementes notwendig ist und dadurch verbleibt kein Überschusswasser, dass die Bildung von Kapillarporen ermöglicht.

### Verfahren IV A

Hiermit wird ein Strangpressverfahren, d.h. Extrusion im Extruder, vorgestellt. Anorganische feste feine Partikel 102 Typ II werden im Körnungsbereich gemahlen von Größtkorn 36 µm bis Kleinstkorn 1 µm und hydraulische oder geopolymerische Bindemittel 212 zugesetzt, wodurch das definierte RC-Mineralmischgut 242, 244 (Wasserfeuchteanteil von 15-25%) als plastisch-feuchter Massestrang durch ein bestimmtes Mundstück (je nach Anforderungen hergestelltes Mundstück dessen Austrittsöffnung die Silhouette im Querschnitt des RC- Mineralformlings in eine Richtung darstellt) vollautomatisch, unter Vakuum und hohem Druck als verdichtete homogene RC-Mineralmischung 242 durch die im Extruder (Strangpresse) befindliche Schneckenwelle gepresst. Der erhöhte Druck an der Ausstoßzone ermöglicht, dass der homogene RC-Mineralmaterialstrom durch das Langlochmundstück formstabile RC-Mineral-Hochbau-Wärmedämm-Produkte produziert, die nach ihrem vollautomatischen Zuschnitt zur 28-tägigen Lagerung zugeführt werden.

### Verfahren V B:

Hiermit wird z.B. ein Walzenschüsselmühlverfahren vorgestellt, in der die inerten anorganischen Abfallpartikel 102, - stoffe und -stoffgemische der Walzenschüsselmühle zugeführt und im Körnungsbereich zwischen Größtkorn < 63 µm bis 1 µm, explizit 36 µm bis Kleinstkorn 1 µm gemahlen werden und dann den Siloanlagen zugeführt und der Baustoffindustrie als feinst gemahlene anorganische Partikel Typ II getrocknete aufgewertete RC-Mineral-Sekundärrohstoffe, RC-Mineral-Hauptkomponente und RC-Mineral-Zuschlagstoffe angeboten.

Der Zerkleinerungsprozess der inerten anorganischen Abfallstoffgemische kann eine Streuung der bauphysikalischen Festigkeiten erzeugen, bedingt durch die unterschiedlichen Mineralstoffe, die durch den ursprünglichen Herstellungsprozess geprägt sind. Da nach der Produktion von RC-Mineral-Hochbau- bzw. RC-Mineral-Tiefbau-Produkten 244, 374 Streuungen in den Festigkeiten zu erwarten sind (unterschiedliche mineralische Zusammensetzungen), kann beispielsweise der niedrigste zu erwartende Wert der Festigkeitsprüfungen angenommen werden.

Die Bestimmung der Korngrößen, der komplexen Mischungen und des Pressdrucks oder des Gießverfahrens wird vereinfacht, wenn eine Prozessüberwachung, Anlagensteuerung und/oder ständige werkseigene Produktionskontrolle durchgeführt wird.

Die so dem Herstellungsprozess zugeführten und mit aktiven puzzolanischen, latent hydraulischen oder mit Füllereigenschaften anorganischen feinsten festen Partikel Typ II können mit konventionellen oder ökologischen Bindemitteln 212 unterschiedlichste Anforderungen und Festigkeiten erreichen. Der Körnungsbereich zwischen Größtkorn < 63 µm bis 1 µm, explizit 36 µm bis Kleinstkorn 1 µm gemahlen, fördert die aktive puzzolanische und/oder latent hydraulischen anorganischen feinsten festen Partikel Typ II zu einem mischbaren, homogenen Puder mit erhöhten chemisch-physikalischen Eigenschaften. Das Puder bzw. RC-Mischgranulat 102 kann dann mit unterschiedlichen Prozentanteilen von hydraulischen oder geopolymerischen Bindemitteln 212, deren Anteil sich nach Anforderungen der Recycling-Mineral-Bauprodukte an Druck- und Biegefestigkeiten und weiteren Ansprüchen wie Wärme- und/oder Schalldämmend, konventionell oder ökologisch richten kann, hergestellt. Konkrete Anteile der hydraulischen und geopolymerischen Bindemittel 212 und Zuschlagstoffe können dabei vollständig an die Anforderungen der benötigten Festigkeiten und Rohdichten angepasst werden.

Ein werkseigenes Produktionskontrolllabor kann die Qualitätssicherung bereitstellen und die Erfüllung umweltrelevanter und technischer Anforderungen realisieren. Ein Beispiel der täglichen Labortätigkeit kann sein die Tagesdurchschnittsproben vorzubereiten für die Bestimmung der Qualitätskriterien (Richtwerte) für die Analyse der chemischen Zusammensetzung (z.B. mittels Röntgen-Fluoreszenz-Gerät), dem Elutionsverfahren (Zulässige Stoffkonzentration im Eluat), den physikalischen Normparameter, Erstarrungsbeginn, Raumbeständigkeit sowie die der Anfangs- und Normfestigkeit. Im Produktionsablauf ist die ständige Kontrolle durch das werkseigene Produktionskontrolllabor die Garantie und die Grundlage für die Produktqualität. Zukünftig kann das WPK-Labor beispielsweise auch die eigene Entwicklung, Gestaltung und Herstellung von zukünftigen RC-Mineral-Bauprodukten 244, 374 bedienen. Das Labor kann teilnehmen, die Zusammensetzung und Qualität der zukünftigen RC-Mineral-Bauprodukte 244, 374 zu optimieren.

Als Bezeichnung für die herzustellenden RC-Mineral-Bauprodukte 242, 244, 374 sind präferiert:

| | |
|---|---|
| Recycling-Mineral-Hochbau-Hauptkomponente Typ II - | RC-M-HB-HK- |
| Mit konventionellen hydraulischen oder geopolymerischen Bindemitteln - | RC-M-HB-HK-K |
| Mit ökologischen Bindemitteln - | RC-M-HB-HK-ÖKO |
| Recycling-Mineral-Hochbauprodukte: Können aufweisen 50 bis 95% oder 50 bis 100% | RC-M-HB-HK |
| Recycling-Mineral-Hochbau-Mauerstein mit > 50% bis 95%(oder 100%) RC-M-HB-HK - | RC-M-HB-MS-K |
| Recycling-Mineral-Hochbau-Mauerstein-ÖKO mit > 50% bis 95%(oder 100%) RC-M-HB-HK - | RC-M-HB-MS-ÖKÖ |
| Recycling-Mineral-Hochbau-Wärmedämm-Mauerstein mit > 50% bis 95%(oder 100%) RC-M-HB-HK | - RC-M-HB-WD-MS-K |
| Recycling-Mineral-Hochbau-Wärmedämm-Mauerstein-ÖKO | |
| mit > 50% bis 95%(od. 100%) RC-M-HB-HK - | RC-M-HB-WD-MS-ÖKO |
| Recycling-Mineral-Hochbau-Schalungsmauerstein mit > 50% bis 95%(oder 100%) RC-M-TB-HK - | RC-M-HB-SMS-K |
| Recycling-Mineral-Hochbau-Estrichplatten mit > 50% bis 95%(oder 100%) RC-M-HB-HK - | RC-M-HB-EP-K |
| Recycling-Mineral-Hochbau-Estrichplatten-ÖKO mit > 50% bis 95%(oder 100%) RC-M-HB-HK - | RC-M-HB-EP-ÖKO |
| Recycling-Mineral-Hochbau-Wandplatten mit > 50% bis 95%(oder 100%) RC-M-HB-HK - | RC-M-HB-WP-K |
| Recycling-Mineral-Hochbau-Wandplatten-ÖKÖ mit > 50% bis 95%(oder 100%) RC-M-HB-HK - | RC-M-HB-WP-ÖKO |
| Recycling-Mineral-Hochbau-Wärmedämmplatten mit > 50% bis 95%(oder 100%) RC-M-HB-HK - | RC-M-HB-WDP-K |
| Recycling-Mineral-Hochbau-Wärmedämmplatten-ÖKO | |
| mit > 50% bis 95%(od 100%) RC-M-HB-HK - | RC-M-HB-WDP-ÖKO |
| Recycling-Mineral-Hochbau-Schalldämmplatten mit > 50% bis 95%(oder 100%) RC-M-HB-HK - | RC-M-HB-SDP-K |
| Recycling-Mineral-Hochbau-Schalldämmplatten-ÖKO mit > 50% bis 95%(od 100%) RC-M-HB-HK | - RC-M-HB-SDP-ÖKO |
| Recycling-Mineral-Hochbau-Formteilemit > 50% bis 95%(oder 100%) RC-M-HB-HK - | RC-M-HB-FT-K |
| Recycling-Mineral-Hochbau-Formteile-ÖKO mit > 50% bis 95%(oder 100%) RC-M-HB-HK - | RC-M-HB-FT-ÖKO |
| Recycling-Mineral-Hochbau-Leichtformteile mit > 50% bis 95%(oder 100%) RC-M-HB-HK - | RC-M-HB-LFT-K |
| Recycling-Mineral-Hochbau-Leichtformteile-ÖKO mit > 50% bis 95%(od 100%) RC-M-HB-HK - | RC-M-HB-LFT-ÖKO |
| Recycling-Mineral-Hochbau-Fertigelemente mit > 50% bis 95%(oder 100%) RC-M-HB-HK - | RC-M-HB-FE-K |
| Recycling-Mineral-Hochbau-Fertigelemente-ÖKO mit > 50% bis 95%(oder 100%) RC-M-HB-HK - | RC-M-HB-FE-ÖKO |
| Recycling-Mineral-Hochbau-Leichtfertigelemente mit > 50% bis 95%(oder 100%) RC-M-HB-HK - | RC-M-HB-LFE-K |
| Recycling-Mineral-Hochbau-Leichtfertigelemente-ÖKO mit > 50% bis 95%(od 100%) RC-M-HB-HK | - RC-M-HB-LFE-ÖKO |
| Recycling-Mineral-Tiefbau-Hauptkomponente Typ II - | RC-M-TB-HK- |
| Mit konventionellen hydraulischen oder geopolymerischen Bindemitteln - | RC-M-TB-HK-K |
| Recycling-Mineral-Tiefbau-Produkte : | |
| Recycling-Mineral-Tiefbau-Plasterstein mit > 50% bis 95% RC-M-TB-HK - | RC-M-TB-PS-K |
| Recycling-Mineral-Tiefbau-Gehwegplatten mit > 50% bis 95% RC-M-TB-HK - | RC-M-TB-GWP-K |
| Recycling-Mineral-Tiefbau-Mauerstein mit > 50% bis 95% RC-M-TB-HK - | RC-M-TB-MS-K |
| Recycling-Mineral-Tiefbau-Schalungsmauerstein mit > 50% bis 95% RC-M-TB-HK - | RC-M-TB-SMS-K |
| Recycling-Mineral-Tiefbau-Wandsysteme mit > 50% bis 95% RC-M-TB-HK - | RC-M-TB-WS-K |
| Recycling-Mineral-Tiefbau-Sockelelement für Lärmschutzwand mit > 50% bis 95% RC-M-TB-HK | -RC-M-TB-SELSW-K |
| Recycling-Mineral-Tiefbau-Lärmschutzwand mit > 50% bis 95% RC-M-B-HK - | RC-M-TB-LSW-K |
| Recycling-Mineral-Tiefbau-Einfassungelemente mit > 50% bis 95% RC-M-TB-HK - | RC-M-TB-EFE-K |
| Recycling-Mineral-Tiefbau-Winkelstützen mit > 50% bis 95% RC-M-TB-HK - | RC-M-TB-WS-K |
| Recycling-Mineral-Tiefbau-Schachtabdeckungenmit > 50% bis 95% RC-M-TB-HK - | RC-M-TB-SAD-K |
| Recycling-Mineral-Tiefbau-Schachtbauwerkemit > 50% bis 95% RC-M-TB-HK - | RC-M-TB-SBW-K |
| Recycling-Mineral-Tiefbau-Kabelschächte mit > 50% bis 95% RC-M-TB-HK - | RC-M-TB-KS-K |
| Recycling-Mineral-Tiefbau-Kanäle mit > 50% bis 95% RC-M-TB-HK - | RC-M-TB-K-K |
| Recycling-Mineral-Tiefbau-Betonrohre mit > 50% bis 95% RC-M-TB-HK - | RC-M-TB-BR-K |

Sowie
RC-M-HB-SRS Als Recycling-Mineral-Hochbau-Sekundärrohstoffe-Typ II - mit > 1% bis 95% RC-M-HB-HK -; für Zemente, Beton, Putze, Estriche, Mörtel, Feuerfeste Produkte und mineralische Kleber
RC-M-HB-HK- Als Recycling-Mineral-Hochbau-Hauptkomponente-Typ II - mit > 1% bis 95% RC-M-HB-HK - für Zemente, Beton, Putze, Estriche, Mörtel, Feuerfeste Produkte und mineralische Kleber;
RC-M-HB-ZS Als Recycling-Mineral-Hochbau-Zuschlagstoffe-Typ II mit > 1% bis < 50% RC-M-HB-HK - für Zemente, Beton, Putze, Estriche, Mörtel, Feuerfeste Produkte und mineralische Kleber; sowie
RC-M-TB-SRS Als Recycling-Mineral-Tiefbau-Sekundärrohstoffe-Typ II - mit > 1% bis 95% RC-M-TB-HK - für Betonfundamente, Betonbauteile, RC-Ersatz für Kies, Sand und Naturstein, Tagesbrüche und Verfüllung für die Ewigkeitslasten durch Bergschäden;
RC-M-TB-HK-Als Recycling-Mineraltiefbau-Hauptkomponente-Typ II - mit > 1% bis 95% RC-M-TB-HK - für Betonfundamente, Betonbauteile, RC-Ersatz für Kies, Sand und Naturstein,Tagesbrüche und Verfüllung für die Ewigkeitslasten durch Bergschäden; RC-M-TB-ZS Als Recycling-Mineral-Tiefbau-Zuschlagstoffe-Typ II mit > 1% bis < 50% RC-M-TB-HK - für Betonfundamente, Betonbauteile, RC-Ersatz für Kies, Sand und Naturstein, Tagesbrüche und Verfüllung für die Ewigkeitslasten durch Bergschäden;
RC-M-HB-P Als Recycling-Mineral-Hochbau-Produkte-Typ II;
RC-M-TB-P Als Recycling-Mineral-Tiefbau-Produkte-Typ II.

Es ist dem Fachmann ersichtlich, dass die vorstehend beschriebenen Ausführungsformen beispielhaft zu verstehen sind und die Erfindung nicht auf diese beschränkt ist, sondern in vielfältiger Weise variiert werden kann, ohne den Schutzbereich der Ansprüche zu verlassen. Ferner ist ersichtlich, dass die Merkmale unabhängig davon, ob sie in der Beschreibung, den Ansprüchen, den Figuren oder anderweitig offenbart sind, auch einzeln wesentliche Bestandteile der Erfindung definieren, selbst wenn sie zusammen mit anderen Merkmalen gemeinsam beschrieben sind. In allen Figuren stellen gleiche Bezugszeichen gleiche Gegenstände dar, so dass Beschreibungen von Gegenständen, die gegebenenfalls nur in einer oder jedenfalls nicht hinsichtlich aller Figuren erwähnt sind, auch auf diese Figuren übertragen werden können, hinsichtlich welchem der Gegenstand in der Beschreibung nicht explizit beschrieben ist.

### Bezugszeichenliste:

- 100: Verfahren zur Herstellung eines RC-Mineralgranulats
- 102: nicht-toxischer inerter inaktiver anorganischer Ausgangsstoff, beispielsweise Abfallstoffe Typ I, die insbesondere nicht mit hydraulischen Binder und Wasser reagieren
- 104: Erste Produktionshalle
- 110: Windsichter
- 120: Magnetabscheider
- 130: Brech- und Siebanlage
- 140: Zerkleinerer
- 150: Mahl- oder Pulverisierungseinheit
- 152: Walzenschüsselmühle
- 160: Feuchtemesseinrichtung
- 170: Absaugeinrichtung
- 180: Silo
- 182: RC-Mineralgranulat
- 190: Lieferstrecke
- 200: Verfahren zur Herstellung eines RC-Mineralmischguts
- 204: zweite Produktionshalle
- 210: Dosier- und Mischanlage
- 212: hydraulische oder geopolymerische Bindemittel
- 214: Flüssigkeitszufuhr, z.B. Wasser
- 220: Transportsystem
- 230: RC-Mineralprodukt-Fertigungsanlage
- 240: Frischseitentransport
- 242: RC-Mineralmischgut
- 244: RC-Mineralprodukt
- 300: Anschlussverfahren
- 304: dritte Produktionshalle
- 310: Hubgerüst
- 320: Gabelwagen
- 330: Senkgerüst
- 340: Zentriervorrichtung
- 350: Verpackungsanlage
- 360: Transporteinrichtung, Gabelstapler
- 370: Entstaubungsanlage
- 374: RC-Mineral(end)produkt

## Patentansprüche

1. Verfahren (100) zur Wiederverwendung schadloser inerter inaktiver anorganischer Ausgangsstoffe (102), beispielsweise Abfallstoffe Typ I, die insbesondere nicht mit hydraulischen Binder und Wasser reagieren, umfassend die Schritte:
Zuführen der Ausgangsstoffe zu einem Mahl- oder Pulverisierungsprozess (150),
Einrichten der Eigenschaften des Mahl- oder Pulverisierungsprozesses derart, dass eine Überwindung von Bindungskräften im Innern der Ausgangsstoffe, eine Oberflächenvergrößerung und/oder ein erhöhtes Reaktionsvermögen des inerten anorganischen Abfallstoffes realisiert wird, insbesondere mittels Mahlens der Ausgangsstoffe im Körnungsbereich von 0,5 µm bis 100 µm, bevorzugt 1 µm bis 63 µm, weiter bevorzugt 1 µm bis 36 µm zur Bereitstellung eines RC-Mineralgranulats (182).

2. Verfahren (100) nach dem vorstehenden Anspruch, wobei der Mahl- oder Pulverisierungsprozess (150) durch einen definierten Mahlprozess erfolgt, insbesondere mittels einer Walzenschüsselmühle (152), und/oder wobei der Mahl- oder Pulverisierungsprozess hergerichtet ist, das RC-Mineralgranulat (182) in feinste feste Partikel im Körnungsbereich Größtkorn < 63 µm bis 1 µm, explizit 36 µm bis Kleinstkorn 1 µm bereitzustellen, und/oder
wobei das mittels des Mahl- oder Pulverisierungsprozesses bereitgestellte RC-Mineralgranulat zumindest eines aus einer aktiven puzzolanischen, einer latent hydraulischen und/oder Füller-Eigenschaft Typ II erreicht.

3. Verfahren (100) nach einem der vorstehenden Ansprüche, mit dem Schritt Zuführen (140) von Mineraldämmwolle in den Mahl- oder Pulverisierungsprozess zur Herstellung des RC-Mineralgranulats.

4. Verfahren (200) zur Herstellung eines RC-Mineralmischguts aus dem mit dem Verfahren nach einem der vorstehenden Ansprüche bereitgestellten RC-Mineralgranulat (182), mit dem weiteren Schritt Vermischen (210) des RC-Mineralgranulats mit einem hydraulischen oder geopolymerischen Bindemittel (212) zur Herstellung eines giessfähigen RC-Mineralmischguts (242).

5. Verfahren (100, 200, 300) zur Herstellung eines RC-Mauersteins und Mauerstein (244, 374) hergestellt aus einem RC-Mineralgranulat (182), insbesondere unter Anwendung des Verfahrens (200) zur Herstellung eines RC-Mineralmischguts nach dem vorstehenden Anspruch, umfassend die Schritte:
Zuführen (110, 120, 130, 140) von schadlosen inerten inaktiven anorganischen Ausgangsstoffen, beispielsweise Abfallstoffe Typ I, die insbesondere nicht mit hydraulischen Binder und Wasser reagieren, zu einem Mahl- oder Pulverisierungsprozess (150, 152),
Einrichten der Eigenschaften des Mahl- oder Pulverisierungsprozesses derart, dass eine Überwindung von Bindungskräften im Innern der Ausgangsstoffe, eine Oberflächenvergrößerung und/oder ein erhöhtes Reaktionsvermögen des inerten anorganischen Abfallstoffes realisiert wird, insbesondere mittels Mahlens der Ausgangsstoffe im Körnungsbereich von 0,5 µm bis 100 µm, bevorzugt 1 µm bis 63 µm, weiter bevorzugt 1 µm bis 36 µm zur Bereitstellung des RC-Mineralgranulats (182),
Vermischen der aktiven puzzolanischen, latent hydraulischen und/oder mit Füller Eigenschaften versehenen anorganischen festen feinsten Partikel Typ II mit hydraulischen oder geopolymerischen Bindemittel (212) zur Herstellung eines giessfähigen RC-Mineralmischguts (242),
Gießen des giessfähiges RC-Mineralmischguts in Schalungsformen.

6. Mauerstein (244, 374) nach dem oder hergestellt nach dem vorstehenden Anspruch,
solcherart hergerichtet, dass seine Vermauerung ohne Mörtel- bzw. Kleberfuge erfolgen kann, so dass kein zusätzlicher Mörtel bzw. Kleber nötig ist und der Mauerstein in endloser Kreislaufwirtschaft immer wieder vollständig rezyklierbar ist.

7. Verfahren nach einem der vorstehenden Ansprüche 4 bis 6,
ferner mit zumindest einem der Schritte Verteilen, Rütteln, anschließendes Glattziehen und/oder nach dem Abbinden der Rohlinge (244) Entschalen des RC-Mineralmischguts (242) mittels einer Vorrichtung, und/oder.
Einstellen eines Wasserzementwertes des giessfähigen RC-Mineralmischguts (242) derart, dass es vollautomatisch in die Auspressform gepumpt und/oder anschließend in eine Presse gepresst werden kann, insbesondere unter Verdichten des RC-Mineralmischguts und Herauspressen überschüssigen Wassers.

8. Verfahren (100, 200, 300) nach einem der vorstehenden Ansprüche 4 bis 7,
ferner umfassend zumindest einen der folgenden Schritte:
Bereitstellen von Pressformen für das RC-Mineralmischgut (242) zur direkten Herstellung von RC-Mineral-Hochbau-Produkten und/oder RC-Mineral-Tiefbau-Produkten und/oder RC-Mineralstein (374), und/oder
vollautomatisches hydraulisches Pressen in der Presse mit definiertem Wasserzementwert für das RC-Mineralmischgut, insbesondere als bodenfeuchtes RC-Mineralmischgut, und/oder
Pressen der verdichteten homogenen RC-Mineralgutmischung mit definiertem Wasserzementwert durch eine in einer Strangpresse befindliche Schneckenwelle, insbesondere als plastisch-feuchter Massestrang durch ein definiertes Mundstück.

9. Verfahren (100, 200, 300) nach dem vorstehenden Anspruch,
Einstellen des Wasserfeuchteanteils des bodenfeuchten RC-Mineralmischguts zwischen 3 bis 15 %, bevorzugt 5 bis 10 %, und weiter bevorzugt 7 bis 9 %, und/oder
Einstellen des Wasserfeuchteanteils des plastisch-feuchten RC-Mineralmischguts im Bereich von 12 bis 30 %, bevorzugt 15 bis 25 %, weiter bevorzugt 18 bis 22 %, und/oder
wobei das definierte Mundstück der Strangpresse je nach Anforderungen anpassbar herstellbar ist, wobei insbesondere dessen Austrittsöffnung die Silhouette des RC-Formlings im Querschnitt in einer Richtung entspricht, und/oder
Durchführen des Pressvorgangs der RC-Mineralgutmischen dergestalt, dass an der Ausstosszone ein erhöhter Druck anliegt, so dass der homogene RC-Mineralmaterialstrom durch das Langlochmundstück formstabile RC-Mineral-Hochbau-Wärmedämm-Mauersteine produziert, und/oder
Durchführen des Pressvorgangs der RC-Mineralgutmischung unter Vakuum.

10. Vorrichtung (104) zur Herstellung eines RC-Mineralgranulats (182) aus schadlosen inerten inaktiven anorganischen Ausgangsstoffen (102), beispielsweise Abfallstoffe Typ I, die insbesondere nicht mit hydraulischen Binder und Wasser reagieren, die Vorrichtung insbesondere hergerichtet zur Durchführung des Verfahrens nach einem der Ansprüche 1 bis 3, umfassend:
einen Windsichter (110) zum Aussortieren leichter Störstoffe,
einen Metallabscheider (120), wie einen Magnetabscheider zur Entfernung metallischer Störstoffe,
eine Brech- und Siebanlage (130) für inerte anorganische Bauabfälle,
eine Mahl- oder Pulverisierungsmühle (150) zum Mahlen auf ein Granulatmaß von kleiner als 100 µm, bevorzugt 63 µm oder kleiner, weiter bevorzugt 36 µm oder kleiner, insbesondere auf eine Feinheit von 100 µm bis 0,5 µm, bevorzugt 63 µm bis 1µm und noch weiter bevorzugt 36 µm bis 1 µm.

11. Vorrichtung (104, 204) zur Herstellung von RC-Mineralmischgut (242, 244) aus RC-Mineralgranulat (182), insbesondere hergestellt gemäß dem Verfahren nach einem der Ansprüche 1 bis 3 oder gemäß der Vorrichtung nach dem vorstehenden Anspruch, die Vorrichtung umfassend:
eine Dosier- und Mischanlage (210) zum beimischen von hydraulischem oder geopolymerischem Bindemittel (212),
ein Transportsystem (220).

12. Vorrichtung (104, 204) nach dem vorstehenden Anspruch, ferner mit zumindest einem der folgenden Merkmale:
eine RC-Mineralprodukt-Fertigungsanlage (230), insbesondere umfassend eine Presse,
eine Frischseitentransportanlage (240),
wobei die Dosier- und Mischanlage (210) einen stationären Mischer umfasst zur homogenen Mikrovermischung des RC-Mineralmischguts (182, 242),
wobei mittels des Transportsystems (220) das RC-Mineralmischgut von der Dosier- und Mischanlage abtransportiert wird, beispielsweise zur RC-Mineral-Hochbau-Produkt-Fertigungsanlage (230),
wobei das Transportsystem (220) eine Kübelbahn umfasst,
wobei die RC-Mineralprodukt-Fertigungsanlage (230) ohne Vorsatzschicht und mit Vibrationsverfahren ausgelegt ist, und/oder
wobei die Frischseitentransportanlage (240) unter Einbeziehung von Qualitätssicherungssystemen und/oder zum Transport zum Hubgerüst ausgelegt ist.

13. Vorrichtung (104, 204, 304) nach einem der Ansprüche 10 bis 12,
ferner umfassend zumindest eines aus:
ein Silo (180) zur Lagerung oder Zwischenlagerung von RC-Mineralgranulat (182), wie ein Tangential-Mischsilo oder ein Multipacksilo,
ein Lager (304) zur Berücksichtigung der hydraulischen Abbindezeit und der Frostgefahr vor der Abbindung,
ein Hubgerüst (310) zur Übergabe von Produktionspaletten an einen Gabelwagen (320),
ein Senkgerüst (330) zum taktweisen Rücktransport der Produktionspaletten,
eine Zentriervorrichtung (340) zum Lösen und Zentrieren der ausgehärteten Steine,
eine Verpackungsanlage (350) zum Zusammensetzen der RC-Mineralprodukte (244, 374) zu Paketen,
eine Rückführungsanlage (370) zur Rückführung der durch den Produktionsprozess entstehenden feinsten festen Partikel durch entsprechende Entstaubungsanlagen,
eine Restfeuchtemesseinrichtung (160),
eine Anlagenüberwachung zur Prozess- und Anlagensteuerung, zur Überwachung der Korngrößen, der komplexen und variierenden Mineralmischungen, des Pressdrucks und/oder des Giessverfahrens, und/oder
wobei die Dosier- und Mischanlage (210) einen stationären Industriemischer mit Planetengetriebe umfasst.

14. Vorrichtung (104, 204, 304) nach einem der Ansprüche 10 bis 13,
wobei in der Dosier- und Mischanlage (210) die anorganischen feinst gemahlenen RC-Mineral-Sekundärrohstoffe und die RC-Mineral-Zuschlagstoffe Typ II und die entsprechenden Bindemittel (212) der jeweiligen Rezeptur gravimetrisch dosiert und in definierten Zeitvorgaben miteinander vermischt werden, und/oder
wobei die Restfeuchtemesseinrichtung (160) hergerichtet ist, mittels der Restfeuchtemessung der anorganischen feinst gemahlenen RC-Mineral-Sekundärrohstoffe Typ II und der Restfeuchtemessung von hydraulischen oder geopolymerischen Bindemittels (212) den Wasserzementwert des RC-Mineralmischguts (242, 244) zu definieren, die zu einer definierten homogenen Mischung führt.
